# EUROPÄISCHE PATENTANMELDUNG

(11) **EP 3 587 858 A1**
(43) Veröffentlichungstag der Anmeldung: **01.01.2020**
(21) Anmeldenummer: 18179984.2
(22) Anmeldetag: 26.06.2018
(51) Int. Cl.: F16G 1/12, F16G 1/28, B65G 15/00

(54) **ZAHNRIEMEN UND VERFAHREN ZUR ZUSTANDSÜBERWACHUNG EINES ZAHNRIEMENS**

(71) Anmelder: Siemens Aktiengesellschaft, 80333 München (DE)
(72) Erfinder: KOENIG, Frank, Windsor, SL45DF (GB)

(57) **Zusammenfassung**

Zahnriemen (10', 10'') enthalten zur Kraftübertragung eine Mehrzahl von Stahlseilen (2). Um unnötig vorzeitige Wartungen und um unerwartete Ausfälle von Zahnriemen (10', 10'') zu vermeiden, wird ein Verfahren zur Zustandsüberwachung vorgeschlagen bei dem
- aus dem Zahnriemen herausragende Stahlseile (2) in Serieschaltung elektrisch miteinander verbunden sind;
- diese Serieschaltung von Stahlseilen (2) mit einem Strom (i) beaufschlagt wird,
- eine Zustandsänderung wenigstens eines der Stahlseile (2) eine Änderung des Widerstandswertes der Serieschaltung und eine Änderung des Stromes (i) und somit der Spannung (Uₚ) über einem Messwiderstand (R₂) bewirkt, die in Echtzeit registriert wird.

## Beschreibung

Die vorliegende Erfindung bezieht sich auf ein Verfahren zur Zustandsüberwachung eines Zahnriemens und einen dafür vorgesehenen Zahnriemen gemäss den Patentansprüchen 1 und 7.

Zahnriemen (in der Motortechnik auch Synchronriemen oder Steuerriemen genannt) sind Treibriemen mit Zahnung, die formschlüssig in gezahnten Riemenscheiben laufen. Zahnriemen vereinen die Eigenschaften einer Kette und eines Flachriemens miteinander. Auf der Innenseite des Riemens sind Zähne aus einem Elastomer ausgeformt, die in ein spezielles Zahnrad eingreifen. Als Material für den Zahnriemenkörper und der Zähne ist Gummi, Chloropren-Kautschuk, Hydrierter Acrylnitrilbutadien-Kautschuk oder Kunststoff (Polyurethan) vorgesehen; Einzelheiten sind dem Dokument [1] zu entnehmen.

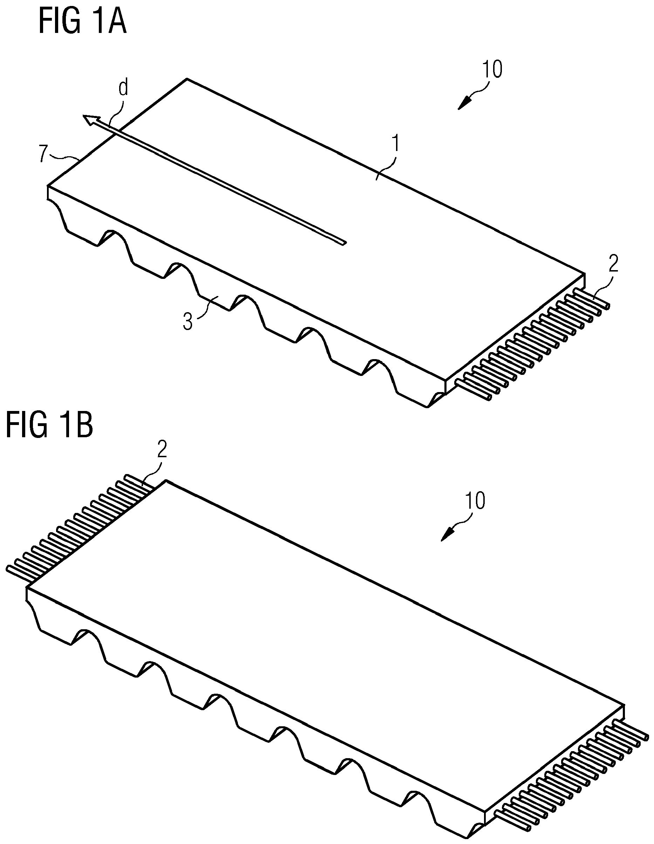

Für die Fördertechnik zB Hubstapler werden Zahnriemen mit mehreren eingelegten Stahlseilen eingesetzt um die Anforderungen hinsichtlich der hohen Belastungen zu erfüllen. Die Zähne der Zahnriemen bewirken eine synchrone Drehmomentübertragung. Die Verzahnung ist oft beschichtet, um einen ruhigen und verschleißarmen Lauf des Antriebs zu gewährleisten. Der grundsätzliche Aufbau eines Zahnriemens ist in FIG 1 gezeigt.

Ein weiteres Anwendungsgebiet von Zahnriemen betrifft Gepäckaufzüge. Der für das Gepäck vorgesehene Behälter wird über ein Pouly vertikal verschoben, dabei ist ein Gegengewicht vorgesehen. Entsprechend den Zähnen des Zahnriemens weist auch das Pouly eine Verzahnung auf.

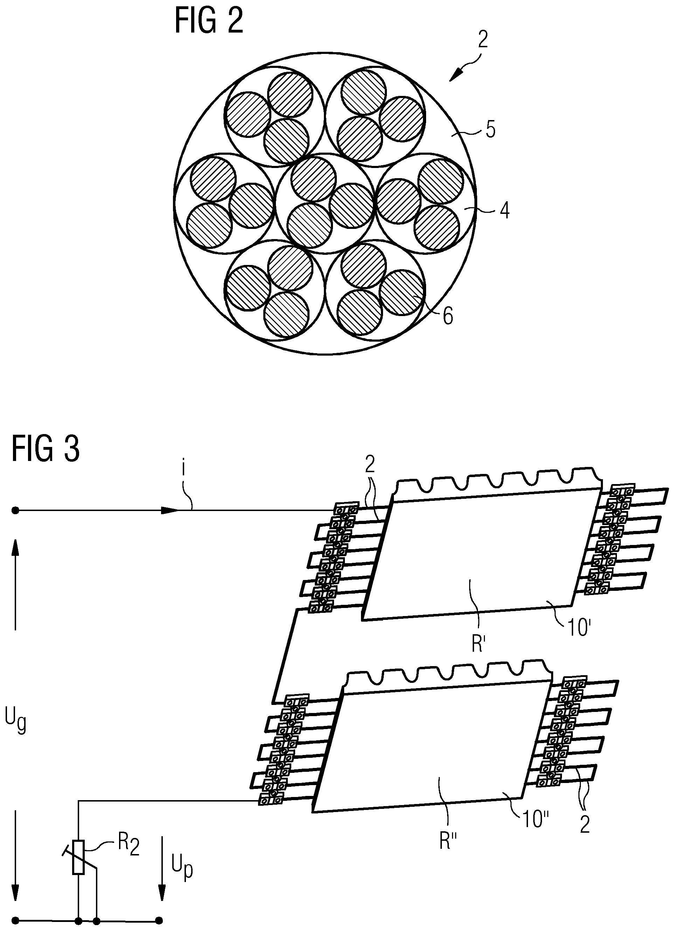

Die Stahlseile sind das kraftübertragende Element in einem Zahnriemen. Ein Seil für Zahnriemen besteht aus sieben Litzen - auch Kordeln genannt - mit je drei Filamenten bzw. Stahlfasern, auch Stahldrähte genannt. Man spricht daher bei einem solchen Stahlseil von einer 7x3 Konstruktion. Der Aufbau eines solchen Stahlseiles ist in FIG 2 gezeigt.

Der Verschleiß von Zahnriemen ist bekannt. So ist aus Sicherheitsgründen eine Fliehkraftbremse vorgesehen, die beim Reiss eines Zahnriemens anspricht und so fatale Folgen verhindert.

Zahnriemen werden daher im Rahmen der planmäßigen Wartung und unabhängig vom tatsächlichen Zustand der Zahnriemen ca. alle 2 Jahre ausgetauscht, da der Zustand der Stahlseile - auch Serviceseile genannt - im Inneren des Riemens nicht bekannt ist.

Einzelne Filamente bzw. Stahldrähte können im Laufe der Zeit brechen und die Festigkeit des Zahnriemens schwächen. Allerdings hängt der tatsächliche Zustand eines Zahnriemens von der Anzahl der verbleibenden intakten Filamente im Zahnriemen ab.

Die aus dem Zahnriemen herausragenden Stahlseile werden am Förderbehälter und an einem Gegengewicht oder Gegenstelle des Fördersystems befestigt, da die Stahlseile letztlich die Kraftübertragung zwischen Zahnriemen und zu bewegenden Objekt (Förderbehälter, Gegengewicht, Gegenstelle) wahrnehmen.

Aus dem Stand der Technik ist eine Vielzahl von Austauschverfahren einschliesslich deren anzuwendenden Intervalle bekannt. Es ist jedoch ein ungelöstes Problem, einerseits die Sicherheit von Antrieben mit Zahnriemen weiter zu erhöhen und andererseits ein unnötiges bzw. ein vorzeitiges Ersetzen von Zahnriemen zu vermeiden und somit einen Beitrag zur besseren Wirtschaftlichkeit von Antrieben mittels Zahnriemen zu erreichen.

Der vorliegenden Erfindung liegt daher die Aufgabe zugrunde, einen Zahnriemen und ein Echtzeit-Verfahren zur Zustandsüberwachung eines Zahnriemens anzugeben, das die vorstehend erwähnten Nachteile bei Fördersystemen mit Zahnriemen beseitigt.

Diese Aufgabe wird durch die in den unabhängigen Patentansprüchen angegebenen Maßnahmen gelöst. Vorteilhafte Ausgestaltungen der Erfindung sind in weiteren Ansprüchen angegeben.

Das erfindungsgemässe Verfahren zur Zustandsüberwachung eines Zahnriemens für ein Fördersystem setzt auf einen Zahnriemen auf, der gebildet ist aus einem Zahnriemenkörper, der ein Zahnprofil aufweist und einer Mehrzahl von parallel in Förderrichtung eingelegten Stahlseilen, die eine Kraftübertragung zu einem zu fördernden Objekt des Fördersystem bewirken und ist gekennzeichnet durch:
- Aus dem Zahnriemen herausragende Stahlseile sind in Serieschaltung elektrisch miteinander verbunden;
- diese Serieschaltung von Stahlseilen wird mit einem Strom beaufschlagt wird;
- eine Zustandsänderung wenigstens eines der Stahlseile bewirkt eine Änderung des Widerstandswertes der Serieschaltung und somit eine Änderung des Stromes die registriert wird.

Der erfindungsgemässe Zahnriemen zur Durchführung des Verfahrens zu dessen Zustandsüberwachung wird gebildet durch einen Zahnriemen für ein Fördersystem aus einem Zahnriemenkörper, der ein Zahnprofil aufweist und einer Mehrzahl von eingelegten parallel in Förderrichtung eingelegten Stahlseilen, die eine Kraftübertragung zu einem zu fördernden Objekt des Fördersystem bewirken, wobei
aus dem Zahnriemen herausragende Stahlseile in Serieschaltung elektrisch miteinander verbunden sind zwecks Feststellung einer Zustandsänderung wenigstens eines der Stahlseile, wobei die Zustandsänderung als Widerstandsänderung der Serieschaltung registriert wird.

Vorteilhafte Ausführungsformen der vorliegenden Erfindung sind in abhängigen Ansprüchen angegeben.

So können sich die folgenden Vorteile zusätzlich ergeben:
i) Durch das Messen des Gesamtwiderstands eines Zahnriemens während dem Betrieb ist eine Überwachung in Echtzeit sichergestellt. Dies ist weit vorteilhafter als die Verwendung von Inspektionsmethoden wie z.B. Hall-Sensor-Messungen. Solche oder ähnliche Inspektionsmethoden erfordern Expertenwissen und demzufolge einen besonderen Personaleinsatz. Eine Überwachung rund um die Uhr in Echtzeit ist mit Inspektionsmethoden nicht möglich. Inspektionen bedingen darüber hinaus in den meisten Fällen eine Stilllegung des Fördersystems.
ii) Die Erfindung erfordert keine Spezialanfertigung von Zahnriemen, da aufgrund des für den Zahnriemen standardmäßig vorgesehenen Materials die Isolation der im Zahnriemen befindlichen Stahlseile ohnehin vorgeleistet ist.
iii) Die Implementierung des erfindungsgemässen Verfahrens ist sogar an einem bestehenden Fördersystem denkbar einfach, als einzige Anpassung ist eine Isolation der Befestigung der Stahlseil am zu fördernden Objekt und/oder Gegengewicht und/oder Gegenstelle.

Die Erfindung wird nachfolgend anhand der Zeichnung beispielsweise näher erläutert. Dabei zeigen:
Figur 1a Aufbau und Komponenten eines Zahnriemens;
Figur 1b Zahnriemen mit beidseitig herausgeführten Stahlseilen;
Figur 2 Struktur eines Stahlseiles;
Figur 3 Ausführungsbeispiel zur Beschaltung für ein Fördersystem, das zwei Zahnriemen aufweist.

Die FIG 1a und 1b zeigen den Aufbau eines Zahnriemens 10. Ein Zahnriemen gemäss der FIG 1b zeigt den Einsatzfall, wo an beiden Enden die Stahlseile herausgeführt sind und an einem Förderbehälter und/oder an einem Gegengewicht oder einer Gegenstelle des Fördersystems befestigt werden, da die Stahlseile letztlich die Kraftübertragung wahrnehmen. Das Zahnprofil 3 bzw. die Zähne 3 werden über eine ein Pouly oder ein Zahnrad Antriebseinheit enthaltend ein Pouly oder Zahnrad geführt für die Bewegung des Zahnriemens 10.

FIG 2 zeigt die Struktur eines Stahlseiles 2, wie es in Zahnriemen 10 zur Kraftübertragung integriert ist. Vorliegend eine 7x3 Konstruktion: Das Stahlseil ist in sieben Stahllitzen 4 bzw. sieben Kordeln 4 gegliedert. Jede Litze 4 enthält drei Stahldrähte 6, die auch als Faser 6 oder als Filament 6 bezeichnet werden. Diese sieben Stahllitzen 4 sind in einem Träger 5 des Stahlseils 2 enthalten.

Die Zustandsüberwachung des Zahnriemens 10, genau des Zustandes der im Zahnriemen 10 enthaltenen Stahlseile 2 erfolgt durch eine Widerstandsmessung. Dazu wird nun Bezug genommen auf die FIG 3. Die parallel zur Förderrichtung d im Zahnriemen 10 befindlichen Stahlseile 2 sind aufgrund der verwendeten Materialien (zB. Polyurethan wie eingangs beschrieben) elektrisch voneinander isoliert. Die Fixierungen der Stahlseile 2 am zu fördernden Objekt oder an einem Gegengewicht sind voneinander elektrisch zu isolieren, beispielsweise durch Schrauben in isolierten Zylindern mit isolierten Unterlagscheiben. Der Disposition gemäss der FIG 3 wird ein Fördersystem mit zwei Zahnriemen 10 zugrunde gelegt. Die herausgeführten Stahlseile 2 werden nun elektrisch miteinander so verbunden, dass eine Serieschaltung von Stahlseilen 2 entsteht. Dabei werden weiter die Serieschaltungen der Zahnriemen 10' und 10" nochmals in Serie geschaltet.

Die spezifischen Widerstandswerte für die Stahlseile 2 sind abhängig von der verwendeten Legierung und dem Querschnitt der Stahlseile 2. Als Beispiel für konkrete Widerstandswerte werden hier für die Zahnriemen 10', 10" der Firma
Ammeraal Beltech Holding BV, The Netherlands http://www.ammeraalbeltech.de/
aufgeführt:
Spezifischer Widerstand eines Stahlseils 3Ω/m. Aus dieser Angabe kann entsprechend der Anzahl Stahlseile 2 in einem Zahnriemen 10 und entsprechend der Länge des Zahnriemens 10 ein Widerstandswert für diesen Zahnriemen 10' berechnet werden. Der Gesamtwiderstandswert ergibt sich durch Multiplikation von Widerstandswert für einen Zahnriemen mit der Anzahl Zahnriemen 10 im Fördersystem.

In die Serieschaltung der Zahnriemen 10', 10" wird weiter ein Messwiderstand R₂ eingefügt. An diese Serieschaltung mit dem Widerstandswert

R' + R" + R₂

wird eine Spannung U_{g} angelegt und diese Serieschaltung wird somit mit einem Strom i beaufschlagt. Als typischer Spannungswert ist

Ug = 24V oder Ug = 48V, vorzugsweise je Gleichspannung, vorgesehen. Über den Messwiderstand R₂ wird durch ein Messgerät mit einem Analogeingang die Spannung Uₚ in Echtzeit gemessen und registriert. Bei auftretenden Brüchen von einzelnen Stahldrähten 6 oder schlimmstenfalls von einzelnen Stahllitzen 4 erhöht sich der ursprüngliche Widerstandswert eines Zahnriemens 10', 10". Dadurch sinkt der Strom i und dies führt zu einem entsprechenden Spannungsabfall am Messwiderstand R₂. Dieser Spanungsabfall wird vom Messgerät registriert und kann - zB abhängig vom zeitlichen Verlauf der Spannungsabfälle - für die Auslösung eines Alarms benutzt werden: Der Alarm kann ausgelöst werden durch:
- Überschreiten einer festgelegten Spannungsänderung pro Zeiteinheit,
- Unterschreiten deines festgelegten Schwellwertes der Spannung Uₚ.

Das vorliegende Ausführungsbeispiel ist auf Fördersysteme mit mehr als zwei Zahnriemen 10', 10" entsprechend anpassbar. In einem Flughafen können auf diese Weise eine Mehrzahl von Zahnriemen 10 enthaltenden Fördersystemen unterschiedlicher Art überwacht werden. Dank der Einfachheit ist die vorliegende Lösung beispielsweise auch für einen Hubstapler anwendbar. Der Zustand der Zahnriemen 10 kann dem Fahrer auf einem Display signalisiert werden.

Das vorliegende Ausführungsbeispiel ist für ein Stahlseil 2 der Ausführung 7x3 beschrieben. Ohne irgendwelche Einschränkungen kann die vorliegende Erfindung auch für sogenannt einfache Stahlseile angewendet werden, die lediglich aus Stahldrähten ohne die Zwischenstruktur Kordel/Litze bestehen. Bremskabel von Fahrrädern weisen beispielsweise eine solche Struktur auf.

### Liste der Bezugszeichen, Glossar

1 Aussenseite
2 Stahlseil
3 Zahn, Zahnprofil
4 Stahllitze, Kordel
5 Träger
6 Filament, Faser, Stahldraht
7 Zahnriemenkörper
10 Zahnriemen
d Förderrichtung
i Strom, Stromstärke
R', R" Gesamtwiderstand eines Zahnriemens 10', 10"
R₂ Messwiderstand
U_{g} angelegte Spannung
Uₚ Spannung über dem Messwiderstand

### Liste der zitierten Dokumente

[1] Zahnriemen
   Heruntergeladen 25.06.2018 https://de.wikipedia.org/wiki/Zahnriemen

## Patentansprüche

1. Verfahren zur Zustandsüberwachung eines Zahnriemens (10) für ein Fördersystem, wobei der Zahnriemen (10) gebildet ist aus einem Zahnriemenkörper (7), der ein Zahnprofil (3) aufweist und einer Mehrzahl von parallel in Förderrichtung (d) eingelegten Stahlseilen (2), die eine Kraftübertragung zu einem zu fördernden Objekt des Fördersystem bewirken, **dadurch gekennzeichnet, dass**
- aus dem Zahnriemen (10) herausragende Stahlseile (2) in Serieschaltung elektrisch miteinander verbunden sind;
- diese Serieschaltung von Stahlseilen (2) mit einem Strom (i) beaufschlagt wird,
- eine Zustandsänderung wenigstens eines der Stahlseile (2) eine Änderung des Widerstandswertes der Serieschaltung und somit eine Änderung des Stromes (i) bewirkt, die registriert wird.

2. Verfahren nach Anspruch 1,
**dadurch gekennzeichnet, dass**
zur Serieschaltung der Stahlseile (2) ein Messwiderstand (R₂) in Serie geschaltet wird.

3. Verfahren nach Anspruch 2,
**dadurch gekennzeichnet, dass**
Beaufschlagung der Serieschaltung mit dem Strom (i) durch Anlegen einer Spannung (U_{g}) erfolgt.

4. Verfahren nach Anspruch 2 oder 3,
**dadurch gekennzeichnet, dass**
das Fördersystem eine Mehrzahl von Zahnriemen (10) enthält und dass die Serieschaltung eines jeden Zahnriemens (10) in Serie mit der Mehrzahl der Zahnriemen (10', 10", ..) geschaltet wird.

5. Verfahren nach einem der Ansprüche 2 bis 4,
**dadurch gekennzeichnet, dass**
die Änderung des Stromes (i) über den Messwiderstand (R₂) eine Änderung der Spannung (Up) bewirkt und von einem Messgerät registriert wird.

6. Verfahren nach Anspruch 5,
**dadurch gekennzeichnet, dass**
die Änderung der Spannung (Up) überwacht wird und bei Überschreiten einer festgelegten Änderung pro Zeiteinheit oder bei Unterschreiten eines festgelegten Schwellwertes ein Alarm ausgelöst wird.

7. Zahnriemen zur Durchführung des Verfahrens nach einem der Ansprüche 1 bis 6, wobei der Zahnriemen (10) gebildet ist aus einem Zahnriemenkörper (7), der ein Zahnprofil (3) aufweist und einer Mehrzahl von eingelegten parallel in Förderrichtung eingelegten Stahlseilen (2), die eine Kraftübertragung zu einem zu fördernden Objekt des Fördersystem bewirken
**dadurch gekennzeichnet, dass**
aus dem Zahnriemen (10) herausragende Stahlseile (2) in Serieschaltung elektrisch miteinander verbunden sind zwecks Feststellung einer Zustandsänderung wenigstens eines der Stahlseile (2), wobei die Zustandsänderung als Widerstandsänderung der Serieschaltung registriert wird.
